# EUROPEAN PATENT SPECIFICATION

(11) **EP 1 876 405 B1**
(45) Date of publication and mention of the grant of the patent: **31.12.2008**
(21) Application number: 07111744.4
(22) Date of filing: 04.07.2007
(51) Int. Cl.: F26B 15/16, F26B 25/00, B65G 25/10

(54) **Device for the transport of timber in a timber-drying kiln**
Vorrichtung für den Transport von Holz in einem Holztrockenofen
Dispositif pour le transport de bois dans un four de séchage du bois

(30) Priority: 07.07.2006 SE 0601523
(43) Date of publication of application: 09.01.2008
(73) Proprietor: Valutec AB, 931 27 Skelleftea (SE)
(72) Inventor: Larsson, Mikael, 931 65, Skellefteå (SE)
(74) Representative: Nilsson, Brita Linnea

(56) References cited:
- US-A- 1 337 439
- US-A- 1 711 100
- US-A- 2 567 983
- US-A- 3 630 439

## Description

This invention is a device for the transport of timber through a timber-drying kiln according to the preamble of claim 1.

In drying devices of the so-called travelling type, the timber is carried on transport units and made to pass or travel through a chamber at the same time as it meets a circulating drying medium such as warm air. The chamber of the drying kiln is long and well sealed towards the surrounding atmosphere and is furnished with an entry gate at the end where the material is fed into the chamber, here called the entry end, and a discharge end at the opposite end of the chamber, here called the discharge end, where the completely dried timber is withdrawn from the chamber. At the entry and discharge ends of the drying chamber, there are usually also entry and discharge chambers. The best known drying plant of this type is the so-called tunnel kiln.

The usual type of transport unit is a carriage on which the timber is transported through the dryer. The timber lies on these carriages in the form of packages of stacked planks, with sticks or skids between each layer so that the drying air effectively reaches all parts of the timber. Slightly larger skids, so-called truck skids, are placed between the stacked packages so that these shall be accessible to a loader, e.g. a fork-lift truck. The carriages are guided on wheels and move on rails which stretch throughout the length of the tunnel. The forward movement in the drying chamber of the tunnel takes place stepwise at the same rate as the carriages with timber packages queuing in the entry chamber are fed into the drying tunnel and the carriages with completely processed dry timber are discharged from the drying tunnel.

To move the carriages through the drying tunnel, a driving unit is used consisting of a chain or a similar motion-transmitting elongated driving element arranged between the rails. At its upper end, the chain is equipped with a feeder bar, the movement of which is controlled by control devices which stretches between rails and which can be made to grip the carriage with the help of a number of fingers arranged on the feeder bar. The carriages are normally fed discontinuously forwards in the tunnel at even intervals, e.g. every other hour. In the drying chamber, there can be up to 19 carriages at the same time, and both in front of and after the chamber, in the entry and discharge chamber, up to 10 carriages. After being unloaded, the carriages are returned from the discharge station to the entry station, being transported outside the kiln with the help of a loader, e.g. a fork-lift truck.

As a result of the atmospheric humidity, high temperatures and corrosive gases, the climate prevailing in the drying chamber has a negative influence on the driving unit for the timber transport inside the chamber. In particular, the components of the drive unit tend to corrode and jam together. To avoid breakdown, stainless materials are used to a great extent and attempts are made to ensure that parts of the drive unit and the associated control system, such as limit and position sensors, are placed outside the drying chamber.

To find a solution to the above problem, the drive motor included in the driving unit at a known drying plant is placed outside the drying chamber and the elongated driving element for driving the carriages is arranged so that it stretches continuously into the chamber via an opening in the lower end edge section of the discharge gate. More precisely, the driving element here consists of a feeder bar stretching between the rails, which executes a linear movement in a horizontal plane guided by control devices placed in the foundation of the kiln. Sealing means have been fitted between the feeder bar and the opening in the gate to prevent leakage. The drive motor is linked in a movement-transmitting connection with the feeder bar via a chain and a transmission in the form of a gear box and this feeder bar can, when the drive motor is activated in different directions, be moved linearly backwards and forwards like a shuttle along the control devices and thereby also along the rails stretching through the drying chamber. The feeder bar is equipped with fingers which can be adjusted in and out to grip the carriages, so that the carriages can be driven forwards and out of the drying chamber through the influence of the feeder bar when the fingers are adjusted to grip the carriages and the feeder bar, from a position inside in the chamber, moves in the pulling direction out from the drying chamber.

A problem in this drying plant is that, due to the environment in the drying chamber and the differences in pressure which arises between the drying chamber and the surrounding atmosphere, leakage occurs between the gate and the feeder bar, and this gives rise to difficulties in controlling the drying climate with the desired accuracy with respect to the set values. This in turn leads of course to quality problems. In addition, there are problems associated with ice formation due to condensation occurring at the opening for the feeder bar in the gate combined with cooling. These problems lead to increased operating and maintenance costs for the drying kiln in addition to quality problems in the dried timber.

US 3 630 439 describes a device for the transport of timber through a drying chamber on units guided on space apart axially aligned stationary rails disposed on opposite sides of an access opening in the chamber. The units are movable on the stationary rails forward through the drying chamber and out through a discharge gate arranged in connection with the drying chamber. A movable rail is mounted on one of the stationary rails for swinging between a position on the stationary rails and another position overlying the one stationary rail. The device enables selective positioning of the movable rail to accommodate either movement of a unit into and out of the chamber, or movement of a door into and out of a position closing and sealing the access opening. The device known from said document lack drive means for feeding the units discontinuously forwards in the tunnel at even intervals, e.g. every other hour and is therefore not associated with problems relating with said drive means in combination to the environment in the drying chamber.

One aim of the present invention is therefore to develop a device by which the above-indicated problems can be avoided and which makes it possible to control the drying climate more accurately and to reduce the maintenance costs, and thereby increase the total productivity of the drying kiln.

According to the invention, these goals are attained because the device has the characteristics and distinctive features indicated in the claims.

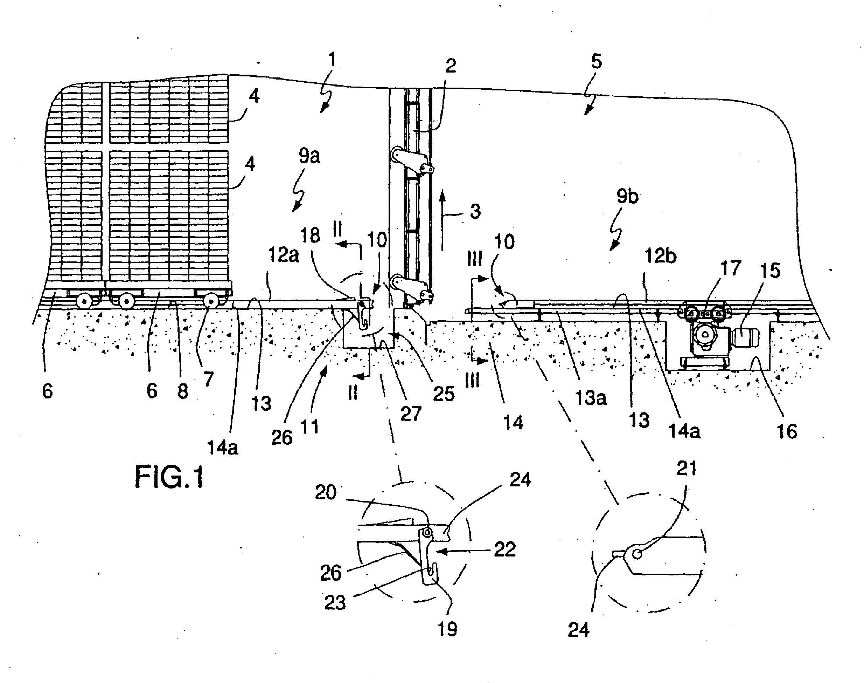

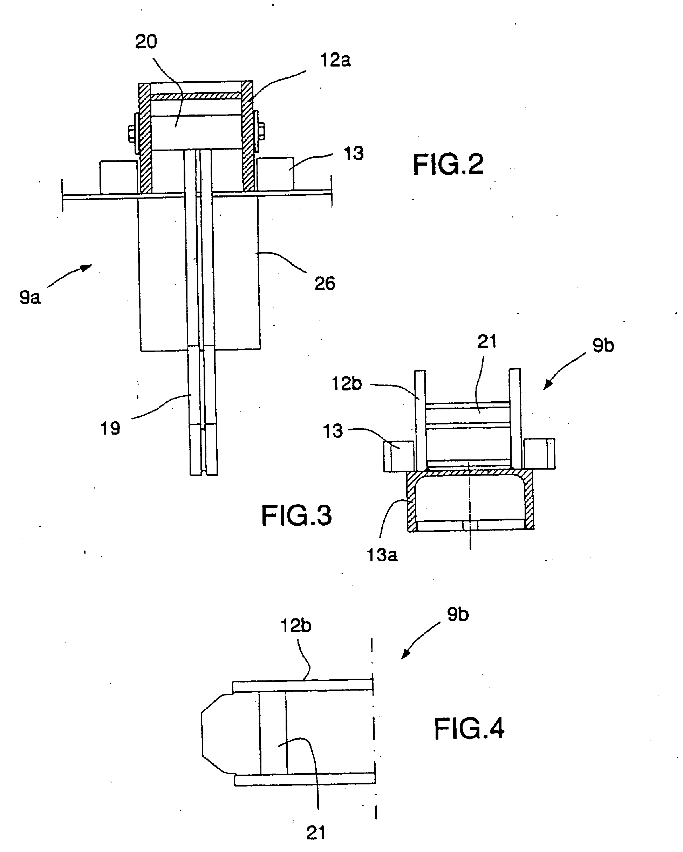

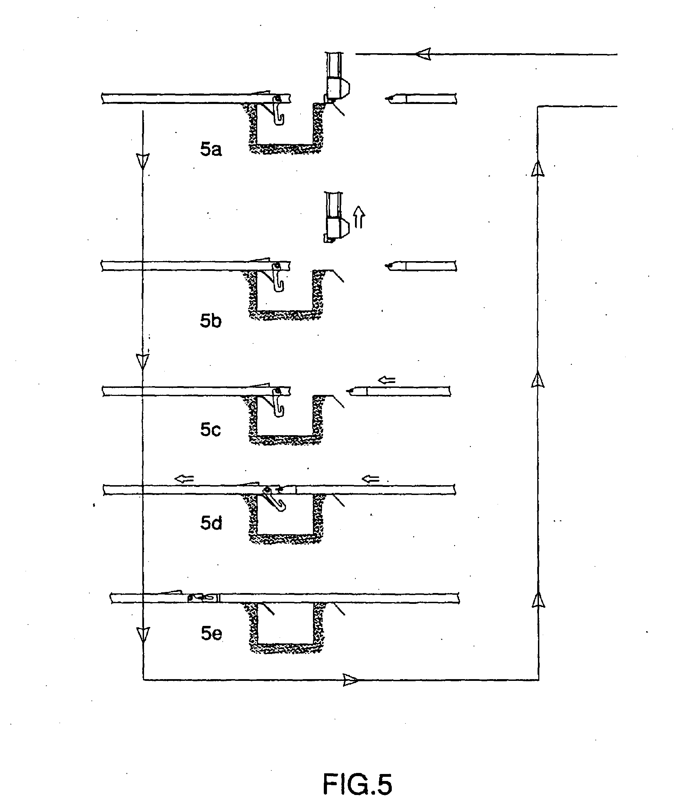

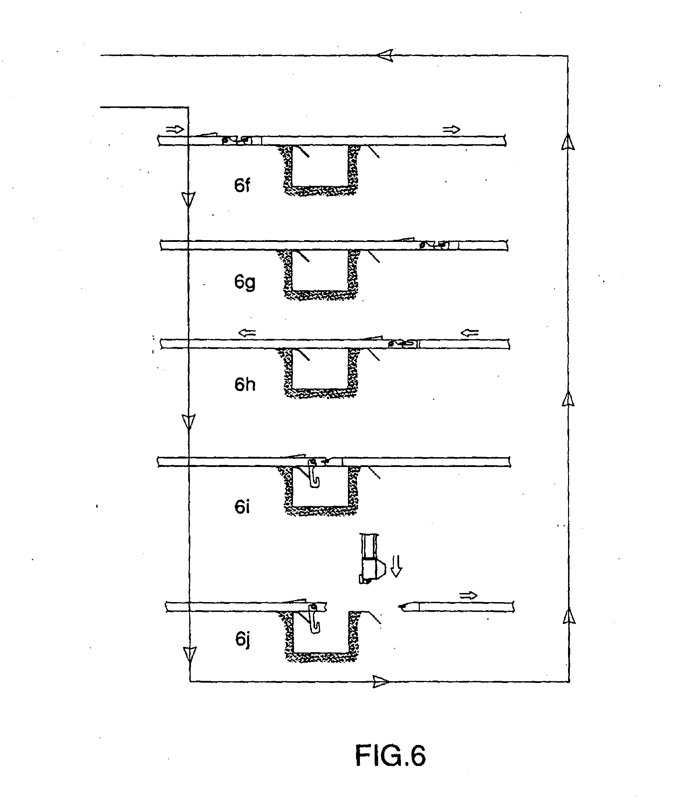

In the following, the invention is described in detail with reference to the attached drawings, where fig. 1 shows a longitudinal section through a part of a kiln of the travelling type with a number of timber-package-bearing transport units which can be moved through the drying chamber of the kiln, fig. 2 shows a cross section of an internal passive feeder bar included in the kiln viewed along the section II-II in fig. 1, fig.3 shows a cross section of a external active feeder bar included in the kiln viewed along the line III-III in fig. 1, fig. 4 shows a view from above of the front end of the external active feeder bar, figs. 5a-e show in a first sequence the initial operating stages in the entry or discharge of timber-bearing transport units from the drying chamber, and figs. 6f-j shows in a second sequence the final operating stages after the completed entry or discharge of timber-bearing transport units from the drying chamber.

In fig. 1, the number 1 indicates a part of the drying chamber, which is essentially sealed against the surrounding atmosphere, in a timber-drying kiln of the travelling type. Drying chamber 1 is equipped with a discharge gate 2 which, as indicated by the arrow 3, can be opened through a vertically upward movement for the outward discharge of the completely dried timber package 4 towards the right in the figure, to a discharge chamber 5 located on the other side of the discharge gate 5. Although it is not shown in the figure, it should be understood that drying chamber 1 in a known manner is equipped with a similar openable gate, here referred to as the entry gate, at the opposite end of the drying chamber. Adjacent to this entry gate, there is similarly an entry chamber, not shown in the figure, in which the non-dried timber packages are stored.

The timber packages 4 are carried on transport units in the form of carriages 6, which are guided on tracks to execute a horizontal linear movement through the drying chamber 1, with the cooperation of the flanged wheels 7 and the rails 8 which stretch throughout the longitudinal direction of the drying chamber 1. The rail track 8 has an extension which is somewhat longer than the actual drying chamber 1 and in any case stretches considerably into both the entry chamber and the discharge chamber 5. The carriage 6 which serves as a transport unit is relatively simple in its structure, and is intended to carry the timber packages 4 so that the longitudinal direction of the timber is perpendicular to the direction of movement of the carriage through the drying chamber 1.

To feed the carriage 6 forward through the drying tunnel 1, a driving unit is used, consisting of an elongated motion-transmitting driving element located between the rails 8, divided into an elongated passive internal bar-shaped drive component loosely designated 9a and an elongated active external bar-shaped component loosely designated 9b. Where they meet or face each other, the ends of the passive internal drive component 9a and the active external drive component 9b are equipped with interacting gripping means roughly indicated at 10. When the discharge gate 2 is open, the gripping mean 10 can, through the influence of the adjustment mean 11, be adjusted into and out of the mutually interlocking grips. When the discharge gate 2 is closed and during the normal operation of the drying chamber 1, the drive components 9a and 9b are separated from each other and located on opposite sides of the discharge gate 2.

Adjusted in an interlocking grip, a drive combination 9a, 9b is obtained where the passive internal drive component 9a follows the actively driven active external drive component 9b so that the drive combination thus created can perform a linear movement into and out of the drying chamber 1 parallel with the rails 8. Further information about this drive combination 9a, 9b, is provided in figs 5 and 6.

Each drive component 9a, 9b comprises a feeder bar 12a, 12b and can as such be regarded essentially as a rigid element. To achieve a linear forward and backward movement between the drying chamber 1 and the discharge chamber 5 in a horizontal plane, the drive components 9a, 9b are steered by control means 13 arranged in the foundation 14, where the control mean of the active external drive component 9b comprises an elongated control rail 13a carrying the afore-mentioned active drive component 9b. As is better shown in fig. 2 and 3, each of the feeder bars 12a, 12b consists of steel profiles welded together.

Furthermore, the drive unit includes a drive motor 15, placed outside the drying chamber 1 and more precisely in the discharge chamber 5, which, in order not to impede the motion of the discharged carriages 6, is countersunk to a level below the rail 8 in a depression 16 designed as a pit in the foundation 14. The drive motor stands in a known manner (and is therefore not shown in great detail) in a motion-transferring connection with the feeder bar 12b of the active drive component 9b, via a transmission 17 comprising a chain running on the control rail 13a and a gear transmission. The transmission 17 is located outside the drying chamber 1 and is designed in a known manner so that the feeder bar 12b of the active drive component 9b, through activation of the drive motor 15 in different directions of rotation can be moved linearly forwards and backwards in the longitudinal direction of the rail track 8 and parallel therewith. In other words, the drive combination 9a, 9b created by the coupled feeder bars 12a, 12b stretches between the drive motor located outside the drying chamber 1 and the interior of the drying chamber 1. The drive combination 9a, 9b after activation by the drive motor 15 is made to move as a unit in a forward direction towards the entry gate of the drying chamber 1 located at the opposite end, and not shown in the figure, and backwards out of the drying chamber pulling the carriages 6 with it.

To discharge the carriage 6, the feeder bar 12a, 12b comprised in each drive component 9a, 9b has a number of evenly distributed fingers 18 along its length, which in a known manner can be made to grip or release the carriage 6. With the drive combination 9a, 9b in its front end position in the drying chamber 1 and the fingers 18 adjusted to their active gripping positions with the carriages, the carriages can be withdrawn from the drying chamber by means of the drive combination 9a, 9b when this is pulled backwards. The carriage 6 then moves in a forward direction on the rail 8 out of the drying chamber 1 and into the discharge chamber 5.

The driving unit includes a programmable control system, a so-called PLC (Programmable Logic Controller), not shown, and also a number of likewise not shown position sensors which, placed along the region of movement of the drive combination 9a, 9b, are used to guide and control the movements of the feeder beam.

In the normal drive position of the drying plant and when the discharge gate 2 is closed, the passive drive component 9a is located inside the drying chamber 1 whilst the active drive component 9b is located in the discharge chamber 5. Thus, the two drive components 9a, 9b located between the rails are normally separated from each other, and the active external drive component 9b is linked in a known manner in a motion-transmitting connection with the drive motor 15 via the transmission 17, so that the active external drive component 9b can be activated by the drive motor 15 to move linearly forwards and backwards along the rail 8.

To form the above-mentioned drive combination 9a, 9b, the above-mentioned gripping means 10 are, in the design form of the invention here described, arranged to engage in and release an interlocking grip through an interaction with the adjustment mean 11. More precisely, the gripping means 10 are adjusted to an interlocking grip through the interaction with the adjustment means 11 when the active drive component 9b located outside the drying chamber 1 is driven forward through the open discharge gate 2 into contact with the passive drive component 9a located in the drying chamber 1, and pushes this in front of it into the drying chamber 1. In a similar manner, the gripping means 10 are adjusted to release the interlocking grip when the active drive component 9b, after the completion of the movement of the drive combination 9a, 9b to pull the carriage 6 out of the drying chamber 1, has changed its direction of movement so that it again pushes the passive drive component 9a in front of it and leaves the same inside the drying chamber 1. For this purpose, the gripping means 10 are designed so that the interlocking grip is maintained both during the backwards pulling movement of the drive combination 9a, 9b out of the drying chamber 1 and during the feeding of the carriages forward out of the drying chamber 1.

With reference to fig. 2-4 and the enlargements in fig. 1, the gripping means comprise a locking pawl 19 which pivots on a transverse gudgeon 20 arranged on the passive internal drive component 9a and a transverse locking gudgeon 21 arranged on the active drive component 9b, designed to interact with the locking pawl. The locking pawl 19 is designed as a hook and is equipped with an opening 22 which leads into a relatively elongated track-shaped notch 23 which, when the locking pawl 19 is turned upwards, can enter into an interlocking grip with the locking gudgeon 21. The elongated track-shaped notch 23 of the locking pawl 19 is essentially U-shaped and has been given such an extension that the drive components 9a, 9b included in the drive combination are effectively locked in the pulling direction from each other through the interaction between the locking pawl 19 and the locking gudgeon 21, but can still execute a certain displacement movement relative to each other with a retained mutual locking effect. More precisely, the locking gudgeon 21 can move between two locking positions in the track-shaped notch 23 of the locking pawl 19, a passive and an active locking position. In the passive locking position, the locking gudgeon does not enter into the track-shaped notch 23, but is only located opposite the track opening 22 of the up-turned locking pawl 19. In this position, the drive components 9a, 9b included in the drive combination normally move together in the direction towards the drying chamber 1. A distance mean 24 arranged at the meeting ends of the drive components 9a, 9b determines the C-C distance between the transverse gudgeon 20 of the passive internal drive component 9a and the transverse locking gudgeon of the active drive component 9b, so that the track opening 22 of the upturned locking pawl 19 is exactly opposite the locking gudgeon 21, when the active external drive component 9b contacts and pushes the passive internal drive component 9a in front of it.

As indicated in fig. 1, the adjustment means 11 comprise a depression 25 arranged in the foundation 14 of the drying chamber, located immediately before the discharge gate 2, which depression allows the locking pawl 19 of the gripping means 10 to release the afore-mentioned passive interlocking grip and, falling down from the locking gudgeon 21, to assume under the influence of gravity the freely hanging position shown in fig. 1. Moreover, the adjustment means 11 comprise a side plate 26 or plate, fastened to the side wall of the depression facing the discharge gate 2, and angled downwards towards the bottom 27 of the depression 25. This side plate 26 thus forms a control surface which interacts with the locking pawl 19 and thus, during the movement of the passive drive component 9a forwards into the drying chamber 1, after the formation of the drive combination, guides the freely hanging track opening 22 of the locking pawl 19 up to meet the locking gudgeon 21 of the active drive component. As indicated above, this position of the gripping means 10 constitutes the above-mentioned passive locking position, since the locking gudgeon 21 has not then been adjusted to an active interlocking grip with the locking pawl 19, but is located only in the area for the track opening 22 of the locking pawl; in contrast to the active locked position when the locking gudgeon 21 is adjusted to the bottom of the notch 23.

During the movement of the drive combination 9a, 9b forwards into the drying chamber 1, the locking pawl is held in its uplifted passive locking position with the locking gudgeon through an interaction with the bearing mean 14a included in the adjustment means 11. In the design form of the invention here described, the bearing means 14a form a part of the foundation 14 or the holding and control means 13a arranged on the foundation (see figs. 2 and 3). In general, it can be said that the depression 25 in the foundation 14 serves as a releasing mean which by interrupting the bearing means allows the supported locking pawl 19 to fall and be released from its passive locking position.

When the drive combination 9a, 9b has reached its front end position and starts its pulling movement backwards in the direction out of the drying chamber so that the active drive component 9b pulls the passive drive component 9a with it, the gripping means take up an active locking position, since the transverse locking gudgeon 21 located in the track opening is displaced to a position at the bottom of the elongated track-shaped notch 23. In this active locking or gripping position, the locking pawl 19 need not be supported by the bearing means 13.

As shown in figs. 5a-e and 6f-j, the above-described device for the transport of timber in a timber-drying kiln has the following method of working: When the carriage 6 loaded with timber packages 4 is to be fed forwards (actually pulled forwards) through the drying chamber 1 and any carriages with completely dried timber packages are to be discharged from the drying chamber and further into the discharge chamber 5, the discharge gate 2 opens (see figs. 5a-b). Thereafter, the drive motor 15 is activated so that the active drive component 9b moves linearly forwards in the direction towards the drying chamber 1 and towards the therein located passive drive component 9a (see fig. 5c). In the continuing forward movement of the active drive component 9b and after contact with the passive drive component 9a, the drive combination 9a, 9b is created which, through the influence of the active part, is pushed as a unit further into the drying chamber 1 (to the left in the figure). Pushed in front of the active drive component 9b, the gripping means first enter into the passive locking position since the freely hanging locking pawl 19 in the depression 24 of the passive drive component 9a, in contact with the control plate 26, is made to swing upwards towards the locking gudgeon 21 so that it enters the track opening 22 of the locking pawl (see figs. 5d-e). During the continuing movement forward of the drive combination 9a, 9b in the direction towards the drying chamber 1, the locking pawl is supported in this passive locking position by the bearing means 13.

When the direction of movement of the drive combination 9a, 9b changes, the fingers 18 are adjusted to an active up-turned gripping position so that the carriage 6, by interaction with the fingers, is withdrawn from the drying chamber 1 by means of the drive combination 9a, 9b (see fig. 6f-g). Since the active external drive component 9b thereby pulls the passive drive part with it out of the chamber 1, the locking pawl 19 and the locking gudgeon 21 go into the active locking position because the locking gudgeon 21 moves from the track opening 22 down to the bottom of the track-shaped notch 23 of the locking pawl 19.

After the completed discharge of the carriages, the drive combination 9a, 9b changes its direction of movement so that it again moves in a direction towards the drying chamber 1, the fingers 18 being adjusted to the non-active position (see fig. 6h). In this connection, the active drive component 9b pushes the passive drive component 9a before it in a direction towards the drying chamber 1, and the gripping means 10, through the influence of the distance mean 24 and the possibility for the locking gudgeons 21 to move within the track-shaped notch 23 of the locking pawl 19, move from an active to a passive locking position. When the drive combination 9a, 9b passes the depression included in the adjusting means 11, the gripping means 10 leave their passive locking position because the locking pawl 19 is released from the locking gudgeon and under the influence of gravity assumes a freely hanging position (see fig. 6i), so that the passive drive component 9a is left within the drying chamber 1. After leaving the passive drive component 9a inside the drying chamber 1, the active drive component 9b again changes its direction of movement and moves backwards towards the discharge chamber 5, to finally stop when it is located completely in the mentioned chamber, after which the discharge gate 2 is closed (see fig. 6j).

The present invention is not limited to that described above or to that shown on the drawings, but can be changed and modified in a number of different ways within the scope of the invention indicated in the subsequent patent claims.

## Claims

1. A device for the transport of timber through a drying chamber in a timber-drying kiln, consisting of one or several track-bound controlled transport units (6) loaded with timber packages (4), which through the influence of a driving unit move forward on rails (8) through the drying chamber (1) and out through a discharge gate (2) arranged in connection with the drying chamber, the driving unit for which comprises a motion-transmitting oscillating driving element arranged to move parallel with the rails, which drive element is elongated and has one end located inside the drying chamber and a second end which, via a transmission (17), is in a motion-transferring connection with a driving unit (15) located outside the drying chamber, so that the transport units are fed forwards by the interaction with fingers (18) arranged along the drive element, **characterized by** the fact that the motion-transmitting drive element comprises a drive combination formed by two elongated separate drive components (9a, 9b) which, during the normal operation of the drying kiln are separated from each other and located on opposite sides of the discharge gate (2), but where the ends of the drive components (9a, 9b) which meet and face each other are equipped with interacting gripping means (10) which, when the discharge gate is open, through the influence of adjustment means (11), can be adjusted into and out of a mutual interlocking grip and where the drive combination formed by this interaction is operated through the influence of the external drive part (9b) which via the transmission (17) has been placed in a motion-transferring connection with the drive motor (15) located outside the drying chamber.

2. A device as described in claim 1 where the drive motor (15) as well as the transmission (17) are located outside the drying chamber (1) countersunk supported in depressions (16) arranged in a foundation (14) belonging to the timber-drying kiln, at levels below the rail track (8).

3. A device as described in claim 2, comprising an elongated control rail (13a) supported in the depression (16), located outside the drying chamber (11), bearing the external drive component (9b) as well as a drive chain included in the transmission (17).

4. A device as described in one of the claims 1-3, where the passive drive component (9a) is controlled by holding and control means (13) installed in the drying chamber (1).

5. A device as described in one of the claims 1-4, where each drive component (9a, 9b) comprises an essentially rigid elongated feeder bar (12a and 12b respectively).

6. A device as described in one of the claims 1-5, where gripping means (10) are arranged to enter into an interlocking grip through the interaction with the adjusting means (11) to create a drive combination (9a, 9b), where the active drive component pushes the passive drive component in the direction towards the drying chamber (1).

7. A device as described in claim 6, where the gripping mean (10) comprises a locking pawl (19) pivoting around a gudgeon (19), which in interaction with the adjustment means (11) enters into an interlocking grip with a locking gudgeon (21).

8. A device as described in claim 7, where the locking pawl (19) is designed as a hook equipped with an opening (22) leading into a relatively elongated track-shaped notch (23) in which the locking gudgeon (21) can be captured.

9. A device as described in claim 8, where the track-shaped notch (23) of the locking pawl (19) is essentially U-shaped and has been given an extension so that the locking gudgeon (21), entered into the notches, locks the two drive components (9a, 9b) included in the drive combination in the pulling direction from each other and, through the influence of distance means (24) arranged between the meeting ends of the drive components, allows a certain relative displacement movement between the drive components with the locking gudgeon sliding along the track-shaped notch (23) up to the track opening (22).

10. A device as described in claim 9, where the distance mean (24) limits the C-C distance between the gudgeons (20) of the pivoting locking pawl (19) and the locking gudgeon (21) when the drive combination (9a, 9b) moves towards the drying chamber (1).

11. A device as described in claim 10, where the adjustment means (11) comprise a control plate (26) which, when drive combination (9a, 9b) moves forward in the direction into the drying chamber (1) guides up the locking pawl (19) to meet the locking gudgeon (21) so that the locking gudgeon is in a position at the track opening of the locking pawl and the bearing means (14a) which carry the locking pawls (19) when the thus formed drive combination (9a, 9b) moves further into the drying chamber.

12. A device as described in one of the claims 7-11, where the adjustment means (11) comprise a depression (24) arranged in the drying chamber (1), allowing the locking pawl (19) of the gripping means (10) to assume a freely hanging position, under the influence of gravity, from the gudgeons (20).

13. A device as described in claim 11, where the locking gudgeon (21) has been adjusted to a position towards the bottom of the track-shaped notch (23) of the locking pawl (19), when the drive combination (9a, 9b), under the influence of the active drive component (9b), moves out from the drying chamber (1).

14. A device as described in one of the claims 7-13, where the passive drive component (9a) carries the locking pawl (19) pivoting around a gudgeon (20), and the active drive component (9b) carries the locking gudgeon (21) which interacts with the locking pawl.

## Patentansprüche

1. Vorrichtung für den Transport von Holz durch eine Trockenkammer in einem Holztrockenofen, bestehend aus einer oder mehreren gesteuerten, mit Holzpaketen (4) beladenen schienengebundenen Transporteinheiten (6), die sich unter der Einwirkung einer Antriebseinheit auf Schienen (8) durch die Trockenkammer (1) und durch ein in Verbindung mit der Trockenkammer angeordnetes Austrittstor (2) vorwärtsbewegen, und deren Antriebseinheit ein bewegungsübertragendes, oszillierendes Antriebselement aufweist, das parallel zu den Schienen bewegbar ist, welches Antriebselement langgestreckt ist und ein Ende innerhalb der Trockenkammer aufweist und ein zweites Ende, das über eine Übersetzung (17) bewegungsübertragend mit einer ausserhalb der Trockenkammer befindlichen Antriebseinheit (15) verbunden ist, so dass die Transporteinheiten durch das Zusammenspiel mit längs dem Antriebselement angeordneten Fingern (18) vorgeschoben werden, **dadurch gekennzeichnet, dass** das bewegungsübertragende Antriebselement eine Antriebskombination bestehend aus zwei separaten langgestreckten Antriebskomponenten (9a, 9b) umfasst, die im Normalbetrieb des Trockenofens voneinander getrennt sind und sich auf gegenüberliegenden Seiten des Austrittstors (2) befinden, wobei die aneinanderstossenden und einander zugewandten Enden der Antriebskomponenten (9a, 9b) jedoch mit zusammenwirkenden Greifmitteln (10) ausgestattet sind, die durch die Einwirkung von Verstellmitteln (11) miteinander verriegelbar und entriegelbar sind, wenn das Austrittstor offen ist, und wobei die durch dieses Zusammenspiel gebildete Antriebskombination durch die Einwirkung des äusseren Antriebsteils (9b) betätigt wird, der durch die Übersetzung (17) bewegungsübertragend mit dem ausserhalb der Trockenkammer angeordneten Antriebsmotor (15) verbunden ist.

2. Vorrichtung nach Anspruch 1, wobei der Antriebsmotor (15) sowie die Übersetzung (17) ausserhalb der Trockenkammer (1) versenkt in Vertiefungen (16) in einem Fundament (14) abgestützt angeordnet sind, das zum Holztrockenofen gehört, und zwar jeweils auf einer Höhe unterhalb der Schienenbahn (8).

3. Vorrichtung nach Anspruch 2, mit einer in der Vertiefung (16) abgestützten und ausserhalb der Trockenkammer (11) befindlichen langgestreckten Steuerungsschiene (13a), die die äussere Antriebskomponente (9b) sowie eine zu der Übersetzung (17) gehörende Antriebskette trägt.

4. Vorrichtung nach einem der Ansprüche 1 bis 3, wobei die passive Antriebskomponente (9a) von in der Trockenkammer (1) angebrachten Halte- und Steuerungsmitteln (13) gesteuert wird.

5. Vorrichtung nach einem der Ansprüche 1 bis 4, wobei die Antriebskomponenten (9a, 9b) je eine im wesentlichen starre langgestreckte Vorschubstange (12a bzw. 12b) umfassen.

6. Vorrichtung nach einem der Ansprüche 1 bis 5, wobei Greifmittel (10) durch das Zusammenwirken mit dem Verstellmittel (11) verriegelbar sind, um eine Antriebskombination (9a, 9b) zu bilden, wobei die aktive Antriebskomponente die passive Antriebskomponente in die Richtung zur Trockenkammer (1) schiebt.

7. Vorrichtung nach Anspruch 6, wobei das Greifmittel (10) eine um einen Bolzen (19) schwenkbare Verriegelungsklaue (19) aufweist, die im Zusammenspiel mit dem Verstellmittel (11) mit einem Verriegelungsbolzen (21) verriegelt in Eingriff gelangt.

8. Vorrichtung nach Anspruch 7, wobei die Verriegelungsklaue (19) als Haken mit einer Öffnung (22) ausgebildet ist, die in eine relativ langgestreckte, als Führung ausgebildete Aussparung (23) mündet, in der der Verriegelungsbolzen (21) festgehalten werden kann.

9. Vorrichtung nach Anspruch 8, wobei die als Führung ausgebildete Aussparung (23) der Verriegelungsklaue (19) im wesentlichen U-förmig ist und eine solche Ausdehnung aufweist, dass der in die Aussparungen eingeführte Verriegelungsbolzen (21) die zwei Antriebskomponenten (9a, 9b) der Antriebskombination in der Zugrichtung verriegelt und durch die Einwirkung von zwischen den aneinanderstossenden Enden der Antriebskomponenten angeordneten Abstandsmitteln (24) eine gewisse relative Verschiebungsbewegung zwischen den Antriebskomponenten gestattet, wobei der Verriegelungsbolzen entlang der als Führung ausgebildeten Aussparung (23) bis zur Führungsöffnung (22) gleitet.

10. Vorrichtung nach Anspruch 9, wobei das Abstandsmittel (24) den Abstand C-C zwischen den Bolzen (20) der schwenkbaren Verriegelungsklaue (19) und dem Verriegelungsbolzen (21) begrenzt, wenn sich die Antriebskombination (9a, 9b) zur Trockenkammer (1) bewegt.

11. Vorrichtung nach Anspruch 10, wobei die Verstellmittel (11) eine Betätigungsplatte (26) aufweist, die die Verriegelungsklaue (19) zum Verriegelungsbolzen (21) anhebt, wenn sich die Antriebskombination (9a, 9b) in die Trockenkammer (1) hinein vorschiebt, so dass der Verriegelungsbolzen in einer Stellung an der Führungsöffnung der Verriegelungsklaue und der die Verriegelungsklauen (19) tragenden Lagermittel (14a) steht, wenn sich die so gebildete Antriebskomponente (9a, 9b) weiter in die Trockenkammer hineinbewegt.

12. Vorrichtung nach einem der Ansprüche 7 bis 11, wobei die Verstellmittel (11) eine in der Trockenkammer (1) angeordnete Vertiefung (24) aufweisen, so dass die Verriegelungsklaue (19) der Greifmittel (10) eine durch die Wirkung der Schwerkraft frei von den Bolzen (20) herabhängende Stellung einnehmen kann.

13. Vorrichtung nach Anspruch 11, wobei der Verriegelungsbolzen (21) in eine Stellung gegen das Ende der als Führung ausgebildeten Aussparung (23) der Verriegelungsklaue (19) gebracht wurde, wenn sich die Antriebskombination (9a, 9b) unter der Einwirkung der aktiven Antriebskomponente (9b) aus der Trockenkammer (1) hinausbewegt.

14. Vorrichtung nach einem der Ansprüche 7 bis 13, wobei die passive Antriebskomponente (9a) die um einen Bolzen (20) schwenkbare Verriegelungsklaue (19) und die aktive Antriebskomponente (9b) den mit der Verriegelungsklaue zusammenwirkenden Verriegelungsbolzen (21) trägt.

## Revendications

1. Dispositif pour le transport de bois à travers une chambre de séchage dans un séchoir à bois, constitué d'une ou de plusieurs unités de transport (6) commandées sur rails, chargées de paquets de bois (4), qui avancent, sous l'action d'une unité d'entraînement, sur des rails (8) à travers la chambre de séchage (1) et sortent par une porte de déchargement (2) reliée à la chambre de séchage, et l'unité d'entraînement pour lesquelles comprend un élément d'entraînement oscillant transmetteur de mouvement qui est agencé de manière déplaçable parallèlement aux rails, lequel élément d'entraînement est allongé et a une extrémité située à l'intérieur de la chambre de séchage et une deuxième extrémité qui, par l'intermédiaire d'une transmission (17), est reliée en transmission de mouvement à une unité d'entraînement (15) située à l'extérieur de la chambre de séchage, de telle sorte que les unités de transport sont avancées par l'interaction avec des doigts (18) agencés le long de l'élément d'entraînement, **caractérisé par le fait que** l'élément d'entraînement transmetteur du mouvement comprend une combinaison d'entraînement composée de deux composants d'entraînement (9a, 9b) allongés séparés qui, pendant le fonctionnement normal du séchoir, sont séparés l'un de l'autre et situés sur des côtés opposés de la porte de déchargement (2), mais où les extrémités des composants d'entraînement (9a, 9b), qui se rejoignent et se font face, sont équipées de moyens de préhension (10) interagissants qui, lorsque la porte de déchargement est ouverte, peuvent être amenés, sous l'impact de moyens de manipulation (11), en et hors d'une position de préhension réciproquement verrouillée, et où la combinaison d'entraînement formée par cette interaction est actionnée par l'action de la partie d'entraînement extérieure (9b) qui a été amenée par la transmission (17) dans un rapport transmetteur de mouvement avec le moteur d'entraînement (15) situé à l'extérieur de la chambre de séchage.

2. Dispositif selon la revendication 1, où le moteur d'entraînement (15) ainsi que la transmission (17) sont situés à l'extérieur de la chambre de séchage (1) et supportés, de manière noyée dans des enfoncements (16) agencés dans une fondation (14) qui fait partie du séchoir à bois, à des niveaux en-dessous de la voie des rails (8).

3. Dispositif selon la revendication 2, comprenant un rail de commande (13a) allongé supporté dans l'enfoncement (16), situé à l'extérieur de la chambre de séchage (11), qui porte le composant d'entraînement extérieur (9b) ainsi qu'une chaîne d'entraînement que comporte la transmission (17).

4. Dispositif selon l'une des revendications 1 à 3, où le composant d'entraînement passif (9a) est commandé par des moyens de retenue et de commande (13) installés dans la chambre de séchage (1).

5. Dispositif selon l'une des revendications 1 à 4, où chaque composant d'entraînement (9a, 9b) comprend une tige d'alimentation (12a et 12b, respectivement) essentiellement rigide.

6. Dispositif selon l'une des revendications 1 à 5, où des moyens de préhension (10) sont agencés de manière à entrer en préhension verrouillée par l'interaction avec les moyens de manipulation (11) afin de créer une combinaison d'entraînement (9a, 9b) où le composant d'entraînement actif pousse le composant d'entraînement passif dans la direction vers la chambre de séchage (1).

7. Dispositif selon la revendication 6, où le moyen de préhension (10) comprend un crochet de verrouillage (19) pivotant autour d'un goujon (19), lequel entre par l'interaction avec le moyen de manipulation (11) en engagement verrouillé avec un goujon de verrouillage (21).

8. Dispositif selon la revendication 7, où le crochet de verrouillage (19) présente la forme d'une griffe munie d'une ouverture (22) débouchant dans une entaille (23) relativement allongée en forme de guidage dans laquelle le goujon de verrouillage (21) peut être retenu.

9. Dispositif selon la revendication 8, où l'entaille (23) en forme de guidage du crochet de verrouillage (19) présente essentiellement la forme d'un U et a une étendue telle que le goujon de verrouillage (21), lorsqu'il rentre dans les entailles, verrouille des deux composants d'entraînement (9a, 9b) inclus dans la combinaison d'entraînement dans la direction de traction et, par l'action de moyens de distance (24) agencés entre les extrémités des composants d'entraînement qui se rejoignent, permet un certain mouvement de déplacement relatif entre les composants d'entraînement alors que le goujon de verrouillage coulisse le long de l'entaille en forme de guidage (23) jusqu'à l'ouverture du guidage (22).

10. Dispositif selon la revendication 9, où le moyen de distance (24) limite la distance C-C entre les goujons (20) du crochet de verrouillage (19) pivotant et le goujon de verrouillage (21) lorsque la combinaison d'entraînement (9a, 9b) se déplace vers la chambre de séchage (1).

11. Dispositif selon la revendication 10, où le moyen de manipulation (11) comporte une plaque de commande (26) qui, lorsque la combinaison d'entraînement (9a, 9b) avance vers dans la chambre de séchage (1) et rentre dans celle-ci, soulève le crochet de verrouillage (19) jusqu'au goujon de verrouillage (21) de telle manière que le goujon de verrouillage se trouve dans une position à l'ouverture du guidage du crochet de verrouillage et des moyens de support (14a) portant les crochets de verrouillage (19) lorsque la combinaison d'entraînement (9a, 9b) ainsi formée continue d'avancer dans la chambre de séchage.

12. Dispositif selon l'une des revendications 7 à 11, où les moyens de manipulation (11) comprennent un enfoncement (24) agencé dans la chambre de séchage (1), permettant au crochet de verrouillage (19) des moyens de préhension (10) d'assumer une position librement suspendue aux goujons (20) sous l'influence de la gravité.

13. Dispositif selon la revendication 11, où le goujon de verrouillage (21) a été amené dans une position contre le fond de l'entaille (23) en forme de guidage du crochet de verrouillage (19) lorsque la combinaison d'entraînement (9a, 9b) se déplace hors de la chambre de séchage (1) sous l'action du composant d'entraînement actif (9b).

14. Dispositif selon l'une des revendications 7 à 13, où le composant d'entraînement passif (9a) porte le crochet de verrouillage (19) pivotant autour d'un goujon (20) et le composant d'entraînement actif (9b) porte le goujon de verrouillage (21) qui interagit avec le crochet de verrouillage.
